# EUROPEAN PATENT SPECIFICATION

(11) **EP 4 444 084 B1**
(45) Date of publication and mention of the grant of the patent: **19.08.2026**
(21) Application number: 21836027.9
(22) Date of filing: 06.12.2021
(51) Int. Cl.: A01K 61/13

(54) **DEVICE FOR REDUCING EXTERIOR PARASITES ON FISH**
VORRICHTUNG ZUR VERRINGERUNG VON ÄUSSEREN PARASITEN AN FISCHEN
DISPOSITIF POUR RÉDUIRE LES PARASITES EXTÉRIEURS SUR LES POISSONS

(43) Date of publication of application: 16.10.2024
(73) Proprietor: SFI SYSTEM ApS, 8230 Åbyhøj (DK)
(72) Inventor: JOHILDARSON, Gunnar, 8400 Horsens (DK)
(74) Representative: AWA Denmark A/S
(86) International application number: PCT/EP2021/084403
(87) International publication number: WO 2023/104282

(56) References cited:
- WO-A1-98/24304
- US-A1- 2019 269 107
- US-A1- 2021 023 572

## Description

### Field of the invention

The present invention relates to a device for reducing the number of exterior parasites on fish.

### Prior art

Sea lice and other ectoparasites feed on their host causing fish to lose skin and scales, which can cause deadly infestations to both farmed and wild fish. The problems often arise from farmed fish due to the higher density of fish found there. Without means of treating the farmed fish, the farmed fish may infest the wild fish population. Atlantic salmons are farmed in the northern seas of Norway, Greenland, Iceland, the Faroe Islands, Canada etc. Salmon lice include lice of the genera *Lepeophtheirus* and *Caligus.* The salmon lice *Lepeophtheirus salmonis,* is a species of copepod in the genus *Lepeophtheirus.* They are also known as "sea lice". They live off the mucus, skin and blood of the fish. They are natural marine parasites of fish, such as adult salmon. When they encounter a marine fish, they adhere themselves to the skin, fins, the gills of the fish, and feeding off the mucous or skin. Sea lice only affect fish and are not harmful towards humans..

Sea lice are one of the major threats to salmon farmers. In small numbers, sea lice cause little damage to a fish although if populations increase on a fish, this can lead to death or inhibit the growth rate of the fish. The parasites can cause physical damage to the fish's fins, skin erosion, constant bleeding, and open wounds creating pathways for other pathogens. The sea lice may also act as a vector for diseases between wild and farmed salmon.

The exterior parasites attached to the fish may be of various types that have the common feature of being able to attach to and parasitise the fish. More than 500 species are recognised, divided into several genera. Fish lice vary in size from just a few millimetres to over 30 millimetres long, with females usually somewhat larger than the males. They have a flattened, oval body, which is almost entirely covered by a wide carapace. Their compound eyes are generally prominent, and the mouthparts and the first pair of antennae are modified to form a hooked, spiny proboscis armed with suckers, as an adaptation to parasitic life. They have four pairs of thoracic appendages, which are used to swim when not attached to the host.

Several approaches have been tried to eliminate lice from fish including chemical treatment, mechanical treatment and treatment with hot water. For example, WO 2016/189146 discloses a device comprising a hollow cylindrical filter member having an inlet and an outlet, the circumference of the inlet and/or outlet being provided with a nozzle, which ejects a fluid towards a predefined point of the hollow cylindrical filter. In this design, parasites contained in the fluid are separated from the fish and reattachment of the parasites to the fish is prevented. However, the design suffers from limited flexibility.

WO 2018/195061 also describes a system and a method for removal of parasites from fish. The system sprays a fluid from nozzles onto the fish to remove parasites from the fish. The system uses arms to regulate the distance between the nozzles and the fish, which ensures a constant distance between the fish and the nozzles.

US 2018/255749 discloses another system for removing parasites from fish and a method of treating fish comprising: urging fish from a pen to a first treatment zone where the fish are pretreated to kill any parasites on the fish, to weaken any parasites on the fish, and/or to weaken the grip of any parasites on the fish; singulating and/or orienting the fish for travel through an inclined or vertical conduit of a second treatment zone; and at the second treatment zone, maintaining at least one treatment head at a near constant effective distance with respect to the fish body surface to dislodge parasites from said fish; and discharging the fish.

US 2019/269107 discloses a system for the elimination of parasites adhered to fish, by directly applying electricity to the fish, thereby removing the parasites without harming the fish. The system includes an entry and drainage area joined to an application area through which the fish pass and come into contact with curtain electrodes and/or grill electrodes, the curtain electrodes and/or grill electrodes: and spray nozzles in the application area for spraying water on the fish to make parasites fall off.

US 2021/023572 discloses a fish delousing installation with a warm water source and a fish slide for fish to slide down. The fish slide has a fish inlet, a fish outlet, and a slide length defined therebetween. Shower nozzles shower the fish with warm water as the fish slide from the fish inlet to the fish outlet.

WO 98/24304 discloses a method and a device for removing exterior parasites from salmon in fish farms. The method is described as mechanical stripping, wherein the fish is led through a water current and subjected to water jets from a number of nozzles. The device is described as comprising four or more nozzles, which are all connected to a water pump. When fish is led past the nozzles, they are subjected to strong water jets ejected from the nozzles.

The present inventor believes that devices for reducing the number of parasites on a fish can be improved, and it is an aim of the present invention to provide an improved device and a corresponding method for reducing the number of exterior parasites on fish

### Summary

The present invention is defined in claim 1 and relates to a device for reducing the number of parasites on a fish, the device comprising a filter member arranged with respect to gravity to have a downward slope along a longitudinal axis from an inlet interface of the filter member to an outlet of the filter member, the filter member having openings with a smallest dimension in the range of 0.5 mm to 50 mm; an inlet channel having an inlet at a first end of the inlet channel and a connection interface at a second end of the inlet channel and being arranged with respect to gravity to have a downward slope along a longitudinal axis from the inlet to the connection interface, the inlet channel being arranged to provide fluid communication between the connection interface and the inlet interface of the filter member; a plurality of parasite removal nozzles surrounding a target volume and being configured to eject a fluid toward the target volume, the plurality of parasite removal nozzles being positioned at a downstream distance from the inlet interface along the longitudinal axis; wherein the downward slope of the inlet channel has an inclination to horizontal, which is the same as or different from an inclination to horizontal of the filter member, and the inlet channel is arranged to provide a vertical drop from a bottom edge of the inlet channel at the connection interface to a bottom edge of the filter member at the inlet interface, which vertical drop is in the range of 2 cm to 50 cm, and which downstream distance is in the range of 0 cm to 50 cm, or wherein the downward slope of the inlet channel has an inclination to horizontal, which is smaller than the inclination to horizontal of the filter member, and the downstream distance is in the range of 2 cm to 50 cm. For example, at least one of the vertical drop and the downstream distance may be at least 5 cm, at least 10 cm or at least 15 cm.

Devices for reducing the number of parasites on a fish of the prior art typically employ tubes or filter members that are arranged vertically so that a fish entering the tube or filter is in a free fall when it is impinged by fluid from a nozzle. This design principle is used in order to prevent the fish from being in contact with a surface when it is impinged with a fluid. A part of a fish being in contact with a surface is prevented from being impinged and thereby removal of parasites from this surface of the fish is prevented. However, the free fall is detrimental to the well-being of the fish, and the fish will eventually hit a water surface or another surface after the treatment, which may damage the fish.

In the present device, the fish enters an inlet channel and then passes from the inlet channel via the connection interface and the inlet interface, the "interface", to a filter member. In the device, at least one of the vertical drop and the downstream distance is at least 2 cm, and the plurality of parasite removal nozzles is configured to eject a fluid toward the target volume. The device may provide a vertical drop between the inlet channel and the filter member of at least 2 cm, e.g. in the range of 5 cm to 50 cm, or the target volume may be positioned at a downstream distance from the inlet interface along the longitudinal axis, which downstream distance is at least 2 cm, e.g. in the range of 5 cm to 50 cm. The vertical drop and the downstream distance may be referred to collectively as a "gap" in the present context. Thereby the location of the target volume generally coincides with the location of the inlet interface, e.g. the gap. Upon passing from the inlet channel to the filter member, the fish passes the inlet interface, e.g. the gap, between the inlet channel and the filter member, and since the target volume is located so that the fish passes through the target volume when passing the inlet interface, e.g. the gap, the fish is impinged by fluid from the plurality of parasite removal nozzles while being in the target volume. In an example, the gap is in the range of 5 cm to 50 cm. In another example, the gap is in the range of 0 cm to 2 cm, and the inlet channel is arranged with respect to gravity to have a downward slope along a longitudinal axis from the inlet to the connection interface, which downward slope of the inlet channel has an inclination to horizontal, which is smaller than an inclination to horizontal of the filter member. In particular, an angle may be defined between the inlet channel and the filter member, and the angle is above 90° and below 180°. For example, the angle between the inlet channel and the filter member may be in the range of 100° to 160°, e.g. 120° to 140°.

In a further example, the inlet channel is arranged with respect to gravity to have a downward slope along a longitudinal axis from the inlet to the connection interface, which downward slope of the inlet channel has an inclination to horizontal, which is equal to an inclination to horizontal of the filter member. For example, the gap may be in the range of 5 cm to 50 cm in this example. In all embodiments, a fish passing through the device will pass through the target volume without being in contact with a surface in the device. Thus, the fish is impinged by fluid from the plurality of parasite removal nozzles without the fish being in contact with surfaces and thereby the fish is impinged along the circumference, especially the entire circumference, of the fish. The gap is limited to a maximum of 50 cm, e.g. the gap may be in the range of 5 cm to 40 cm or 5 cm to 30 cm, and the fish is subjected to a limited vertical drop compared to devices of the prior art. The combination of a limited vertical drop and the plurality of parasite removal nozzles, or the combination of the plurality of parasite removal nozzles being at a downstream distance from the inlet interface of at least 2 cm, e.g. at least 3 cm, at least 4 cm, at least 5 cm or at least 10 cm, especially when the inlet channel has an inclination to horizontal, which is smaller than the inclination to horizontal of the filter member, e.g. when the angle between the inlet channel and the filter member is in the range of 100° to 160°, e.g. 120° to 140°, simulate the effect of subjecting a fish to an actual vertical drop, as employed in devices of the prior art, and impingement from fluid from nozzles likewise employed in the prior art but without subjecting the fish to the damaging effects of the vertical fall required in the devices of the prior art. Thereby, the present device improves the well-being of fish upon treatment to remove external parasites compared to devices of the prior art. This improvement in well-being of the treated fish in turn improves the growth of farmed fish, e.g. for a population of farmed fish, and thereby improves the productivity of a fish farm. Thus, the present invention provides a device that improves the productivity of a fish farm. The extension of the vertical drop generally depends on the size of the fish to be treated in the device, but the vertical drop is at least 2 cm, typically at least 5 cm. For very large fish, the vertical drop may be up to 50 cm. An exemplary range for the vertical drop is 10 cm to 25 cm.

The plurality of parasite removal nozzles is configured to eject a fluid toward the target volume. The target volume may be described to have an extension along the longitudinal axis of the filter member and to have a cross-sectional shape in the direction normal to the longitudinal axis of the filter member. For example, the target volume may be described in relation to the fish to be treated in the device. Thus, the target volume may have an extension along the longitudinal axis of the filter member in the range of 2 cm to 25 cm, e.g. 5 cm to 15 cm, and cross-sectional dimension in the direction normal to the longitudinal axis of the filter member in the range of 10 cm to 50 cm, e.g. 20 cm to 30 cm.

A fish to be treated in the device enters the device at the inlet and leaves the device at the outlet. The distance from the inlet to the outlet is referred to as a "downstream" distance in the present context, and the downstream distance may further be specific for the filter member or the inlet channel. For example, a downstream distance may be defined from an appropriate starting point, e.g. the inlet or the inlet interface.

The device has a plurality of parasite removal nozzles surrounding a target volume and being configured to eject a fluid toward a target volume. The plurality of parasite removal nozzles surrounds the target volume, and in the present context, "surrounds" and "surrounding" mean that the parasite removal nozzles are arranged so that jets from the plurality of parasite removal nozzles impinge a target, e.g. a fish, in the target volume along the circumference, e.g. the entire circumference, of the target. Fluid from the plurality of parasite removal nozzles detaches parasites from the surface of the fish in general, although the plurality of parasite removal nozzles especially ensures that parasites attached at or near the gills of a fish are detached. The plurality of parasite removal nozzles is positioned at a downstream distance from the inlet interface along the longitudinal axis, which downstream distance is in the range of 0 cm to 50 cm. The downstream distance together with the angle of the plurality of parasite removal nozzles determine the relative position of the target volume. The downstream distance of the plurality of parasite removal nozzles may depend on the size of the fish to be treated in the device, and therefore the downstream distance may be up to 50 cm. However, it is preferred that the downstream distance is in the range of 0 cm to 25 cm, e.g. 0 cm to 10 cm. For example, the plurality of parasite removal nozzles may be located at the inlet interface.

The device comprises a connection interface and an inlet interface. The connection interface is present at the outlet end of the inlet channel, and the inlet interface is generally at an inlet end of the filter member. Thus, the connection interface and the inlet interface describe the transition from the inlet channel to the filter member, and the connection interface and the inlet interface may collectively be referred to as the "interface" between the inlet channel and the filter member. The inlet channel has at least a bottom edge, but it may also comprise side walls and a top edge. For example, the inlet channel may be a tube or the like with a closed perimeter, or the inlet channel may be upwards open and have only the bottom edge and side walls. Likewise, the filter member has at least a bottom edge, but it may also comprise side walls and a top edge. For example, the filter member may be a tube or the like with a closed perimeter, or the filter member may be upwards open and have only the bottom edge and side walls. In any case, the inlet channel may be joined with the filter member at the interface to appropriately provide the vertical drop from the bottom edge of the inlet channel at the connection interface to the bottom edge of the filter member at the inlet interface, and/or to provide an angle between the inlet channel and the filter member, e.g. an angle in the range of 100° to 160°, or 120° to 140°.

The inlet channel and the filter member may have any length as desired. The length of the filter member should be calculated from the inlet interface to the outlet. Likewise, the length of the inlet channel should be calculated from the inlet to the connection interface. In general, the length of the filter member may be expressed relative to the size, e.g. the length, of the fish to be treated in the device. For example, the filter member may have a length of at least twice the length of the fish to be treated. Thus, the filter member may have a length in the range of 25 cm to 500 cm, e.g. 50 cm to 200 cm, or 100 cm to 150 cm. The inlet channel is not limited with respect to its length but in general the length of the inlet channel is at least 10 cm. For example, the length of the inlet channel may be in the range of 20 cm to 200 cm.

The inlet channel is preferably arranged with respect to gravity to have a downward slope along a longitudinal axis from the inlet to the connection interface, wherein the downward slope of the inlet channel has an inclination to horizontal, which is the same as or different from an inclination to horizontal of the filter member. Thus, in this example there is a downward slope from the inlet to the outlet. In an example, the inlet channel and the filter member have the same inclination to horizontal. This provides a simpler design compared to when the inlet channel and the filter member have different inclinations to horizontal.

In general, the inlet channel and the filter member may be upwards open or have a shape with a closed perimeter, but the shape is not limited. Thus, the inlet channel and the filter member may have any cross-sectional shape. For example, the inlet channel and the filter member may have cylindrical shapes with a closed perimeter, e.g. cylindrical shapes with a circular, rectangular, or polygonal, e.g. triangular or square, shape. In an example, the inlet channel and the filter member have cross-sectional shapes, especially cross-sectional shapes with a closed perimeter, and the inlet channel and the filter member are positioned excentrically, e.g. to provide a vertical drop in the range of 2 cm to 50 cm. The inlet channel and the filter member each have a largest cross-sectional dimension, e.g. a diameter, and the largest cross-sectional dimension of the inlet channel and the filter member may be the same or different. In an example, the inlet channel and the filter member have cross-sectional shapes, especially cross-sectional shapes with a closed perimeter, having a largest cross-sectional dimension, wherein the largest cross-sectional dimension of the cross-sectional shape of the filter member is larger than the largest cross-sectional dimension of the cross-sectional shape of the inlet channel, and the inlet channel is positioned excentrically relative to the filter member. In particular, the inlet channel and filter member may be positioned excentrically to provide a vertical drop in the range of 2 cm to 50 cm. When the inlet channel is positioned excentrically relative to the filter member it is preferred that the inlet channel and the filter member have a cross-sectional shape with a closed perimeter, and further that the inlet channel has a top edge that is joined with a top edge of the filter member. Devices for reducing the number of parasites on a fish of the prior art generally require a complex design or manual operation to ensure that a fish is positioned correctly in the device for the fish to enter the vertically arranged tube or filter and be optimally impinged with fluid from appropriate nozzles. By using an inlet channel positioned excentrically relative to the filter member, a simplified device for reducing the number of parasites on a fish is provided since the fish will follow the bottom of the inlet channel and enter the filter member via the interface and automatically pass the target volume where it is impinged with fluid from the plurality of parasite removal nozzles. This is particularly true, when the inlet channel has a minimum at its bottom, e.g. by having a circular or oval cross-section or a cross-section defined by two plates as described for a specific example of the disclosure. It is thus preferred that the inlet channel and the filter member have cylindrical shapes with circular cross-sections so that the largest cross-sectional dimension is the diameters of the respective circular cross-section, e.g. the inlet channel has a diameter that is smaller than the diameter of the filter member. When the inlet channel and the filter member have cylindrical shapes with circular cross-sections, the smaller diameter of the inlet channel provides that the fish enters the filter member and necessarily passes the target volume for optimal impingement by fluid from the parasite removal nozzles. The extent of the vertical drop corresponds to the difference in the diameter of the filter member minus the diameter of the inlet channel. For example, the inlet channel may have a diameter in the range of 20 cm to 40 cm, and the filter member may have a diameter in the range of 25 cm to 60 cm, with the diameter of the filter member being larger than the diameter of the inlet channel.

The filter member comprises openings. The openings are sized to allow external parasites detached from a fish in the device to pass through while retaining the fish in the filter member of the device. Thereby, the parasites are separated from the fish, and the fish without parasites can exit the filter member via the outlet. In the context of the present disclosure a parasite is a parasite that can attach to an outer surface of the fish. The parasites may also be referred to as "external parasites" or "ectoparasites", and the terms may be used interchangeably. The present device cannot remove internal parasites from a fish. The openings can be described to have dimensions in the surface of the filter member, and the openings have a smallest dimension in the range of 0.5 mm to 50 mm. In particular, the smallest dimension of the openings may be selected based on the species of fish to be treated with due consideration of the parasites, and the size of the parasites, expected to infest the relevant species of fish. The openings may have any shape in the surface of the filter member. For example, the openings may be round, oval, rectangular, or polygonal. In an example, the openings are circular with a diameter in the range of 5 mm to 25 mm. In a specific example, the openings have an extended shape with extension of the openings along the longitudinal axis from the inlet interface of the filter member to the outlet of the filter member, and the smallest dimension is found in the direction transverse to the longitudinal axis, e.g. the openings are generally rectangular. In this example, the smallest dimension may be in the range of 3 mm to 30 mm. The extension of the openings along the longitudinal axis may be in the range of 50 cm to 200 cm. When the openings extend along the longitudinal axis, a fish in the device slides more easily from the inlet interface to the outlet to thereby minimise the risk of damage to the fish from passing over openings with edges that are normal to the longitudinal axis. Thereby the device increases the value of fish treated in the device compared to a device having other shapes of the openings. In an example, the filter member comprises, e.g. is provided by, a plurality of bars arranged along the longitudinal axis at a distance between the bars in the range of 0.5 mm to 50 mm, e.g. 5 mm to 25 mm. The cross-sectional shape and size of the bars may be selected freely. In general, the cross-sectional size of the bars may be selected to be in the range of 10% to 50% of the typical width or height of a fish to be treated in the device. For example, the bars may have a round cross-section with a diameter in the range of 10 mm to 100 mm, e.g. 25 mm to 50 mm. The cross-sectional size of the bars may alternatively be selected in relation to the distance between the bars, i.e. the smallest dimensions of the openings created between the bars. For example, the cross-sectional size of the bars may be in the range of 25% to 150% of the openings, e.g. the distance between the bars. For example, the distance between the bars, thus representing the openings, may be in the range of 5 mm to 50 mm, and the bars may have a round cross-section with a diameter in the range of 10 mm to 75 mm, e.g. 25 mm to 50 mm. The bars may in particular be parallel. The bars may have a length in the range of 10% to 100% of the distance between the inlet interface and the outlet so that the bars will provide openings having a length in the range of 10% to 100% of the distance between the inlet interface and the outlet. When the openings are thus provided by bars along the longitudinal axis, the openings, i.e. the spaces between the bars, will have an extension in the direction of the movement of the water and the fish in the device, and thereby the fish slides more easily in the device, and moreover, detached parasites will leave the device more efficiently through the openings than when the openings have other shapes.

For a fish in the device to be impinged over its circumference, two or more parasite removal nozzles may be used, and two parasite removal nozzles can represent a plurality of parasite removal nozzles in the present context. The plurality may also include more than two parasite removal nozzles. The plurality of parasite removal nozzles may be defined by a cross-sectional shape having a largest cross-sectional dimension, which largest cross-sectional dimension is equal to, or larger or smaller than the largest cross-sectional dimension of the filter member and larger than the largest cross-sectional dimension of the inlet channel. In particular, the filter member may have circular cross-section, and the plurality of parasite removal nozzles may be defined by a circular cross-section, with a diameter equal to, or larger or smaller than the diameter of the filter member. It is also contemplated that the plurality of parasite removal nozzles may have a substantially continuous slit along a perimeter. In an example, the plurality of parasite removal nozzles, e.g. 3 to 24 parasite removal nozzles, such as 4, 6, 8, 12 or 16 parasite removal nozzles, is arranged along the perimeter of a circle, e.g. a circle in a plane normal to the longitudinal axis or a circle in a plane deviating from normal to the longitudinal axis. However, it is also contemplated that the "plurality" of parasite removal nozzles may be a single nozzle or two nozzles, surrounding the target volume. For example, the parasite removal nozzles, in particular, when the plurality of parasite removal nozzles comprise one or two parasite removal nozzles, may have a slit extending, e.g. extending fully or partly, along a perimeter defined by the parasite removal nozzles. When a slit surrounds the perimeter, especially when the slit extends fully along the perimeter, the parasite removal nozzles can eject a cone shaped jet of fluid with the tip of the cone being located at the centre of the target volume towards which the parasite removal nozzles are directed. In a further embodiment, the parasite removal nozzles, e.g. 3 to 24 parasite removal nozzles, of the plurality of parasite removal nozzles are arranged in a circle, and the parasite removal nozzles a configured to eject a fluid toward two or more distinct sites, which distinct sites defined the target volume. For example, 3 or more parasite removal nozzles may eject a fluid toward a first site and 3 or more parasite removal nozzles may eject a fluid toward a second site, e.g. where the second site is downstream from the first site relative to the inlet interface. In further embodiments, the device has additional pluralities of parasite removal nozzles along the longitudinal axis.

The fluid ejected from the parasite removal nozzles may be water or a mixture of water and air. In general, the ejected fluid may be described in terms of its velocity, e.g. in m/s, or its volumetric flow, e.g. I/minute. The velocity is selected to be in the range that allows removal of parasites from a fish but prevents damage to the fish from the ejected fluid. The velocity is generally dependent on the fish to be treated, the species of parasites expected to infest the relevant to the fish to be treated, and the amount of air in water when a mixture of water and air is employed. Appropriate velocities are known to the skilled person.

The target volume is typically located in the filter member, and the plurality of parasite removal nozzles may have any angle relative to the longitudinal direction of the filter member. In general, the angles of the parasite removal nozzles relative to the longitudinal direction of the filter member determine the position of the target volume. For example, the angle may be in the range of 20° to 90° relative to the longitudinal direction of the filter member, e.g. as defined by the longitudinal axis of the filter member. Regardless of the positioning of the plurality of parasite removal nozzles, the angle may be adjustable. Likewise, the parasite removal nozzles may also be adjustable relative to the shape of the perimeter the plurality of the parasite removal nozzles. For example, the parasite removal nozzles may define a circular perimeter, and the diameter of the circle may be adjustable. When the angle and/or the positioning of the parasite removal nozzles is/are adjustable, the placement of the target volume relative to the inlet interface may likewise be adjusted depending on the angle or position of the parasite removal nozzles. When the angle and/or the position of the parasite removal nozzles is adjustable, the device can treat fish of different sizes by adjusting the angles and/or the position and thereby adjusting the placement of the site between the inlet point and the outlet point.

In an example of the device, the plurality of parasite removal nozzles defines a cross-sectional shape relative to the longitudinal axis, for example a cross-sectional shape in a plane normal to the longitudinal axis or a cross-sectional shape in a plane deviating from normal to the longitudinal axis, and the cross-sectional shape, and optionally also the size of the cross-sectional shape, corresponds to the cross-sectional shape, and optionally also the cross-sectional size, of the filter member. For example, the filter member may have a circular cross-section, and the plurality of parasite removal nozzles may also define a circular cross-section, e.g. in a plane normal to or deviating from normal to the longitudinal axis. In particular, the cross-sectional shape of the plurality of parasite removal nozzles may be arranged concentrically with the cross-sectional shape of the filter member. When the plurality of parasite removal nozzles is arranged concentrically with the cross-sectional shape of the filter member, the device may be easily constructed in a housing.

In addition to the parasite removal nozzles, it is preferred that the device comprises a plurality of guidance nozzles at the outlet. The plurality of guidance nozzles is configured to eject a fluid, e.g. water or a mixture of water and air, toward a site between the inlet interface and the outlet. Parasites are detached from a fish in the device, and the downward slope of the filter member, e.g. the downward slope between the inlet and the outlet, provides that the flow of water in the device is from the inlet to the outlet, and the flow of water from the inlet to the outlet generally carries parasites detached from a fish along with the flow. Detached parasites mainly fall through the openings of the filter member so that the detached parasites are kept separated from the fish. The guidance nozzles are not required to be able to detach a parasite from a fish in the filter member but instead serve prevent parasites detached from a fish in the device from leaving the filter member via the outlet and also prevent detached parasites from reattaching to the fish in the filter member from which the parasites have been detached. The velocity of fluid from the guidance nozzles is typically lower than the velocity of the fluid from the parasite removal nozzles. When a plurality of guidance nozzles is included in the present device, the positioning of the plurality of guidance nozzles is considered to define the outlet of the present device, even though the filter member may also extend beyond the position of the plurality of guidance nozzles, e.g. relative to the inlet interface. The site between the inlet interface and the outlet may be a site where is fish is intended to move through when sliding from the inlet interface to the outlet, or the site between the inlet interface and the outlet may be a site where is fish is not expected to move through when sliding from the inlet interface to the outlet. The plurality of guidance nozzles may for example surround a perimeter at the outlet, or the plurality of guidance nozzles may have another layout. The plurality of guidance nozzles is to be understood as comprising at least two guidance nozzles, but the plurality of guidance nozzles generally includes 3 to 24 guidance nozzles, such as 4, 6, 8, 12 or 16 guidance nozzles. The plurality of guidance nozzles may be arranged along the perimeter of a circle, e.g. a circle in a plane normal to the longitudinal axis or a circle in a plane deviating from normal to the longitudinal axis. It is also contemplated that the plurality of guidance nozzles may be a single guidance nozzle or two guidance nozzles, surrounding the site. For example, the guidance nozzles, in particular, when the plurality of guidance nozzles comprise one or two nozzles, may have a slit extending, e.g. extending fully or partly, along a perimeter defined by the nozzles.

In a further example of the device, the inlet channel and the filter member have circular cross-sectional shapes with a closed perimeter, and the diameter of the inlet channel is smaller than the diameter of the filter member. The circular inlet channel may be positioned excentrically relative to the circular filter member, and the device may have a plurality of parasite removal nozzles arranged concentrically with the circular shape of the filter member. This allows that the interface is positioned for the fish to enter the target volume with an approximately equal distance to the individual parasite removal nozzles of the plurality of parasite removal nozzles to ensure a uniform treatment of the fish along its circumference. Thus, in a specific embodiment, the inlet channel and the filter member have circular cross-sectional shapes with a closed perimeter, and the diameter of the inlet channel is smaller than the diameter of the filter member, and the circular inlet channel is positioned excentrically relative to the circular filter member, and the device has a plurality of parasite removal nozzles arranged concentrically with the circular shape of the filter member, with the inlet channel further being positioned for the fish to enter the target volume with an approximately equal distance to the individual nozzles of the plurality of parasite removal nozzles. It is further preferred that the angle of the parasite removal nozzles relative to the longitudinal direction of the filter member is in the range of 80° to 90° to ensure that the target volume is located short after the fish enters the filter member. It is further preferred that the angle between the inlet channel and the filter member is in the range of 170° to 190°, e.g. about 180°.

In an example, the inclination to horizontal of the filter member is steeper than inclination to horizontal of the inlet channel. In a further example, the inclination to horizontal of the inlet channel is steeper than inclination to horizontal of the filter member. However, the inclination of the filter member, and also of the inlet channel, may be selected as desired, but in an example the downward slope of the filter member and/or the inlet channel has an inclination to horizontal in the range of 2° to 60°, e.g. 5° to 40° or 10° to 30°. When the angle is up to 60°, the risk of damage to a fish passing through the device is sufficient, especially when the vertical drop is in the range of 10 cm to 50 cm.

The device may treat any type of fish, but the fish is appropriately a farmed fish. For example, the fish to be treated may be a fish that swims in the open water in its natural environment or the fish to be treated may be a fish that will generally stay on the bottom. Fish that swim in the open water may also be referred to a "pelagic fish" and bottom living fish may also be referred to as "demersal fish". Exemplary farmed fish to be treated in the device include salmon, salmonids, carps, tilapias, pangasius, Roho labeo, croaker, groupers, trouts, amberjack, seabreams, seabass, mullets, cyprinids, barramundis, and marble goby. All fish are considered, in the context of the present disclosure, to have a length axis from the head of the fish to the tail of the fish. When a fish is oriented in the present device, the length axis of the fish will generally be oriented along the line between the inlet point and the outlet point.

A fish to be treated in the device enters the device at the inlet and leaves the device at the outlet. While passing from the inlet to the outlet, the fish is exposed to the fluid from the nozzles, i.e. the parasite removal nozzle and optionally also the guidance nozzles, at the respective sites and/or positions. Jets of fluid, e.g. water or a mixture of water and air, from each of the parasite removal nozzles of the device impinge on the fish, and the impingement detaches a parasite, e.g. a salmon louse, present at the site of impingement on the skin of the fish from the fish. In general, a fish to be treated in the device is removed from the water, e.g. it is separated from the water in a fish pen, before entering the device, so that no further water is required than the water inevitably entering the device together with a fish to be treated in the device for the fish to slide from the inlet to the outlet. However, the device may also comprise a water supply, e.g. a water supply being part of a transport system for transporting a fish, to provide a flow of water from the inlet to the outlet.

In further examples, either or both of the filter member and the inlet channel have a design to remove parasites attached to the fins on the back of the fish, e.g. the dorsal fins, and/or the fins on the belly of the fish, e.g. the anal fins, respectively. Both examples employ the same concept, and the concept is initially described for the inlet channel and subsequently for the filter member. However, any detail described for the inlet channel example may be readily implemented for the filter member example, and vice versa. The inlet channel has an inlet and a connection interface, and the filter member has an inlet interface and an outlet. In the present context, the inlet and the inlet interface may be referred to collectively as the "inlet point", and the connection interface and the outlet may be referred to collectively as the "outlet point". Correspondingly, a line may be defined between the inlet and the connection interface, and a line may be defined between the inlet interface and the outlet, which may be referred to as the line between the inlet point and the outlet point.

Thus, in one example of the device, the inlet channel comprises two walls distanced from each other along a longitudinal axis with the inlet and the connection interface being between the two walls; the two walls each having a bottom edge and a top edge with a distance between the bottom edges, being in the range of 0 cm to 10 cm, and a distance between the top edges being larger than the distance between the bottom edges, so as to form an angle between the two walls in the range of 10° to 140°; the inlet channel further comprising a parasite removal nozzle above a line defined between the inlet and the connection interface and/or a parasite removal nozzle below the line defined between the inlet and the connection interface, the parasite removal nozzle being configured to eject a fluid toward a position on the line defined between the inlet and the connection interface. In another example, the filter member comprises two walls, the two walls optionally comprising openings as defined above and each having a bottom edge and a top edge with a distance between the bottom edges being in the range of 0 cm to 10 cm, and a distance between the top edges being larger than the distance between the bottom edges, so as to form an angle between the two walls in the range of 10° to 140°; the device further comprising a parasite removal nozzle above a line defined between the inlet interface and the outlet and/or a parasite removal nozzle below the line defined between the inlet interface and the outlet, the parasite removal nozzle being configured to eject a fluid toward a position on the line defined between the inlet interface and the outlet. In a specific example, the distance between the bottom edges is in the range of 0.5 mm to 10 cm, and this distance represents the openings of the filter member and the two walls making up the filter member do not comprise further openings.

The device of the invention may comprise a filter member and/or an inlet channel comprising two walls distanced from each other along a longitudinal axis. The longitudinal axis is generally defined between the respective inlet point and outlet point, i.e. between the inlet and the connection interface for the inlet channel, and between the connection interface and the outlet for the filter member, and the line defined between the inlet point and the outlet point may represent the longitudinal axis. The term "longitudinal axis" and "the line defined between the inlet point and the outlet point" may be used interchangeably in the context of the invention.

Each of the two walls have a bottom edge and a top edge, and the two walls are arranged so that there is a distance between the bottom edges and a larger distance between the top edges. The distance between the bottom edges may be uniform between the inlet point and the outlet point, or the distance between the bottom edges may be non-uniform between the inlet point and the outlet point. For example, the distance between the bottom edges may decrease from the inlet point to the outlet point, or the distance between the bottom edges may increase from the inlet point to the outlet point. It is also possible for the distance to vary from the inlet point to the outlet point. Regardless of the uniformity or non-uniformity, the distance between the bottom edges being is in the range of 0 cm to 10 cm. The two walls of the device may also have sections where the distance between the bottom edges is larger than 10 cm, and in this case the inlet point is generally considered to be the location where the distance is 10 cm.

When the distance between the bottom edges is larger than 0 cm, the distance may also be referred to as an "aperture", and the corresponding distance may be referred to as an aperture size. The aperture size may be selected based on the size of the fish to be treated in the device; in particular, the aperture should be sufficiently small to prevent a fish being treated to pass through while at the same time allowing a parasite detached from the fish to pass through the aperture. For example, when a salmon, or a fish of similar size, is to be treated, the aperture may be in the range of 2 cm to 5 cm. The device may have any appropriate filter to capture parasites having passed through the aperture. For example, the device may comprise a filter along and below the aperture. A filter below the aperture will generally not have any holes or passages allowing parasites to pass through the filter. For example, the filter may have a cut-off size in the range of 1 mm to 30 mm, but in any case, the cut-off size will be smaller than the aperture size.

The distance between the bottom edges may be 0 cm between the inlet point and the outlet point. In the context of the invention, a distance of 0 cm between the bottom edges is contemplated to include distances too small to allow a parasite detached from a fish to pass between the two walls. Thus, in an embodiment, the distance between the bottom edges is in the range of 0 cm to 2 mm. When the distance between the bottom edges is 0 cm or in the range of 0 cm to 2 mm, the distance may also be referred to as a "junction" and the device can be said to have a junction. When the device has a junction, the downward slope between the inlet point and the outlet point ensures that a parasite detached from a fish in the device will be collected in the junction, and any flow of water in the device ensures that the parasite washed off a fish is transported to the outlet where it can be collected. The device may have any appropriate filter or the like to collect parasites at the outlet.

It is also contemplated that a section between the inlet point and the outlet point has a distance between the bottom edges of 0 cm and another section with a distance between the bottom edges larger than 0 cm, i.e. an aperture.

In a specific example, the device comprises a roof to configured to cover the filter member and/or a roof configured to cover the inlet channel, e.g. by being connected to the top edges of the walls. A roof prevents detached parasites from being flushed over the top edges of upwards open inlet channels and filter members by the water in the device. A roof also prevents that a fish to be treated can leave the device. This is especially advantageous when the distance between the inlet point and the outlet point is low, e.g. compared to the length of the fish to be treated. Thus, a roof is especially advantageous when the distance between the inlet point and the outlet point is up to 50 cm.

The filter member and the inlet channel, e.g. the sliding surfaces, may be made from any material. For example, the sliding surfaces may be the surface of a sheet or plate of any material, or the sliding surfaces may be the surface of a block of a material. The walls are preferably a sheet or plate, and the sliding surface may be of the same material as the sheet or plate, or the sheet or plate may be coated with another material to provide the sliding surface. Preferred materials for the filter member and the inlet channel include metals, polymer materials, glasses, ceramics etc., or their combinations. For example, the walls may be made of stainless steel or aluminium, e.g. anodised aluminium, or a polymer material selected from polyethylene (PE), polyvinylchloride (PVC), polycarbonate, polytetrafluoroethylene (PTFE), polystyrene (PS), polyethylene terephthalate (PET), poly(methyl methacrylate) (PMMA), cyclic olefin copolymer (COC) etc. It is preferred that the material is resistant to corrosion from salt water.

The surfaces of the filter member and the inlet channel, e.g. the sliding surface, may be smooth or structured, e.g. rough. In an example, the filter member and the inlet channel comprise walls, and the walls are made from sheets or plates of a material, and the sheet or plate is perforated. For example, the walls may have openings, e.g. with dimensions in the range of 0.5 mm to 25 mm, allowing a parasite to pass through the openings while retaining a fish on the sliding surface. In a specific example, filter member, e.g. the walls, comprises longitudinal openings, e.g. with a width in the range of 0.5 mm to 25 mm, of a length of up to 90% of the distance between the inlet point and the outlet point. Such openings, regardless of their shape, allow that parasites detached from a fish pass through the openings and can be collected. Thereby, reattachment of the parasites to the fish is minimised. The openings may represent 50% to 90% of the surface area of the filter member, e.g. the walls. This advantageously minimises the weight of the device.

In a specific example, the device comprises a filter for retaining detached parasites. The filter may be located at any appropriate position, e.g. at the outlet point or below the bottom edges or the filter may be located below the section with openings. Thereby, it is prevented that the parasites can leave the device together with the fish and reattachment to the fish is minimised.

The sliding surfaces may be planar, or the sliding surfaces may deviate from a planar shape. For example, the sliding surfaces may have convex or concave shapes with respect to the sliding surface. When the sliding surface deviates from a planar surface, the angle between the walls is calculated from tangent lines at the junction or aperture, as appropriate.

The nozzles, i.e. the parasite removal nozzle and the guidance nozzles, used in the device of the invention can eject any fluid as desired, and the fluid may be a liquid or a gas, or a mixture of a liquid and a gas. In an example, the fluid is a liquid/gas mixture, e.g. water and air. When the fluid contains water, it is preferred that the water has a salinity appropriate for the species of fish to be treated in the device. The source providing the fluid, may be any type of pump, e.g. a centrifugal pump or similar pumps capable of delivering the pressure of the fluid that provides a sufficient velocity of the fluid. Also, a compressor of suitable performance may provide the necessary pressure and velocity of the fluid, when the fluid is a compressible fluid such as gas. Typically, when the fluid is a gas, such as air, the gas is pressurised prior to exiting the nozzle to a pressure of at least 1.0 MPa to ensure a sufficient velocity of the gas when it exits the nozzle. Suitably, the pressurised gas has a pressure of at least 1.2 MPa, such as at least 1.5 MPa. Generally, an improved removal of parasites is not obtained for a pressure above 10 MPa. Preferred pressures of the inlet gas to the nozzle is not above 8.0 MPa for an economical process and is preferably not above 6.0 MPa.

The device of the invention advantageously does not require any moving parts, e.g. no moving parts between the inlet and the outlet. Thus, in an example the device does not have any moving parts between the inlet and the outlet.

In operation, a fish, e.g. a farmed fish, to be treated in the device is gently caught in a fish pen, e.g. the enclosure, net, cage or tank, in which it is farmed and separated from the water. The fish may be removed from the aqueous environment as desired, e.g. using a pump of any sort and/or via a conveyor belt of any sort, which transports the fish to the device. Alternatively, the fish is led directly to the device, e.g. from the pump that caught the fish. The separation may occur for example with a separation grating. The fish may pass the device optionally aided by an operator or assisted by mechanical means. After a fish has been treated and parasites detached from the fish, the fish and the detached parasites are separated from each other, and the fish can re-enter into the fish pen. To avoid recontamination of the treated fish it may be quarantined in an intermediate enclosure or tank. Alternatively, the fish pen from which the fish originates is cleaned and disinfected before the fish is returned.

The device may comprise a camera to identify parasites on a fish and/or to identify that a fish does not have a parasite, e.g. at a specific location such as at or near a fin. In particular, the device may comprise two or more cameras with a first camera located to take pictures of a fish before being treated in the device and another camera to take pictures of a fish after being treated in the device. When the device has two or more cameras, it may also comprise a computing device allowing comparison of pictures, e.g. the computing device may be configured to compare pictures, recorded by the two or more cameras in order to estimate the detachment of parasites from a fish.

The device of the invention is useful in a method for reducing the number of exterior parasites on a farmed fish. The method is appropriately performed in an appropriate device of the disclosure.

In an example, the method further comprises the step of identifying the fish infested with an exterior parasite in the fish pen. The identification may take place, e.g. using a camera, when the fish is in the fish pen, or the identification may take place after separating the fish from the water in a fish pen.

In general, all features described above for different examples of the device of the invention are relevant for all other examples of the device of the invention and though not explicitly stated, the features may be combined freely taking into account the necessary limitations described for an individual feature or a set of features.

### Brief description of the figures

In the following the invention will be explained in greater detail with the aid of an example and with reference to the schematic drawings, in which
Figure 1 shows a schematic perspective drawing of a device according to the present disclosure;
Figure 2 shows a schematic perspective drawing of a device according to the present disclosure;
Figure 3 shows a schematic perspective drawing of an example of a device according to the present disclosure;
Figure 4 shows a schematic perspective drawing of an example of an inlet channel of a device of the present disclosure;
Figure 5 shows a schematic perspective drawing of an example of a filter member of a device of the present disclosure;
Figure 6 shows an embodiment of a device according to the present disclosure;
Figure 7 shows the embodiment illustrated in Figure 6 when viewed in the direction of the longitudinal axis from the outlet of the device;
Figure 8 shows four units of the device illustrated in Figure 6 and Figure 7, the units being arranged side by side.

The figures are for illustrative purposes, and the figures are not drawn to scale.

### Detailed description of the invention

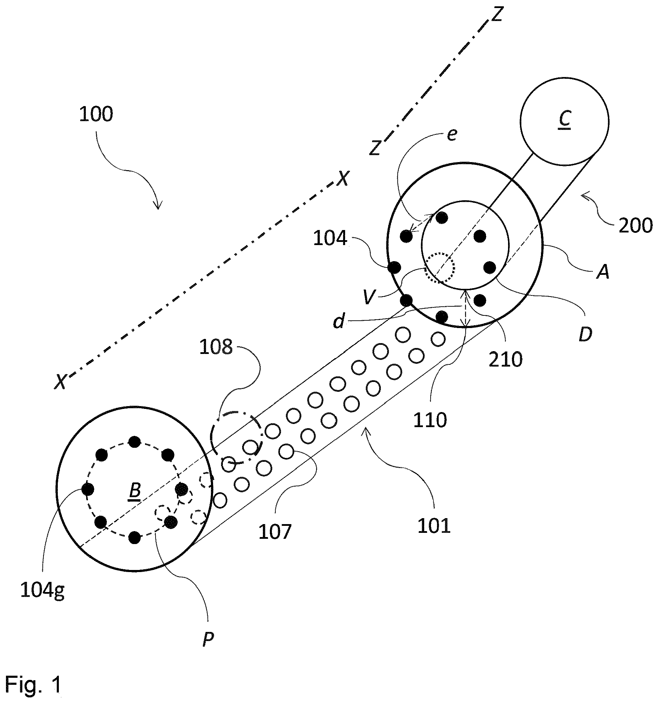

The present invention relates to a device 100 for reducing the number of parasites on a fish. The device 100 is depicted schematically in Figure 1, which shows a filter member 101 arranged with respect to gravity to have a downward slope along a longitudinal axis *X-X* from an inlet interface A of the filter member 101 to an outlet B of the filter member 101. The filter member 101 has openings 107 to prevent the fish to be treated from passing through but allowing a detached parasite to pass through. The device 100 has an inlet channel 200 having an inlet *C* at a first end of the inlet channel 200 and a connection interface *D* at a second end of the inlet channel 200. The inlet channel 200 is arranged to provide fluid communication between a connection interface *D* and the inlet interface *A* of the filter member 101 and to provide a vertical drop *d* from a bottom edge 210 of the inlet channel 200 at the connection interface *D* to a bottom edge 110 of the filter member 101 at the inlet interface A, the vertical drop *d* simulates the vertical drop, which a fish is subjected to in prior art devices but without exposing the fish to potentially damaging effects of a vertical fall. A plurality of parasite removal nozzles 104 surrounds a target volume *V* and is configured to eject a fluid toward the target volume *V.* The plurality of parasite removal nozzles 104 is positioned at a downstream distance e from the inlet interface A along the longitudinal axis X-X, and the downstream distance e is sufficient to allow a fish of relevance in fish farming to be treated in the device 100. The vertical drop d and the downstream distance e together provide that the fish to be treated in the device 100 is in a simulated free fall in the target volume *V.* The device 100 further comprises a plurality of guidance nozzles 104g at the outlet *B.* The plurality of guidance nozzles 104g is configured to eject a fluid toward a site 108 between the inlet interface A and the outlet *B.* Specifically, the plurality of guidance nozzles 104g is arranged with a circular perimeter *P.*

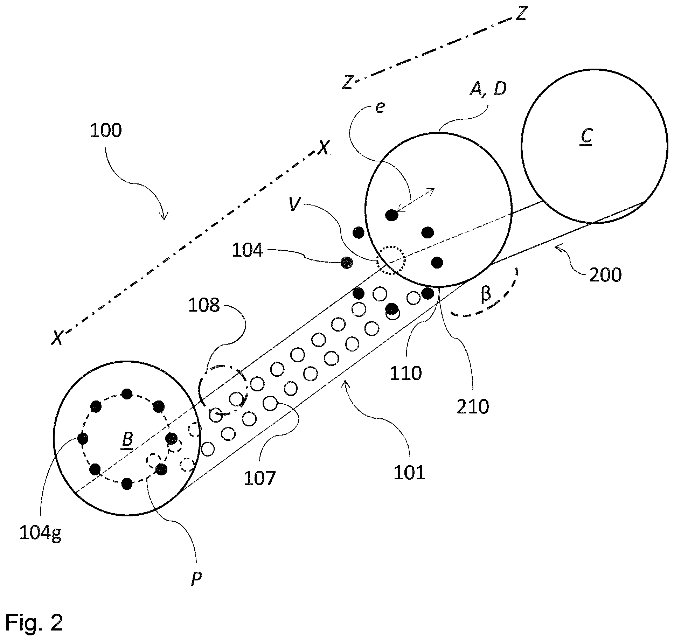

A further example is illustrated in Figure 2, where the vertical drop d is 0 cm, and where the inlet channel 200 is arranged with respect to gravity to have a downward slope along a longitudinal axis from the inlet *C* to the connection interface *D,* which downward slope of the inlet channel 200 has an inclination to horizontal, which is smaller than an inclination to horizontal of the filter member 101. A plurality of parasite removal nozzles 104 is located at a downstream distance from the inlet interface A and configured to eject a fluid toward the target volume *V*, and a plurality of guidance nozzles 104g is located at the outlet *B* and configured to eject a fluid toward a site 108 between the inlet interface A and the outlet *B*. The plurality of guidance nozzles 104g is arranged with a circular perimeter *P*.

In specific examples as schematically illustrated in Figure 1 and Figure 2, the inlet channel 200 and the filter member 101 are made AISI 316 stainless steel tubes. The length of the filter member 101 in Figure 1 and Figure 2 is 200 cm, and length of the inlet channel 200 is 100 cm. In Figure 1, the inlet channel 200 has a diameter of 200 mm and the filter member 101 has a diameter of 300 mm. The inlet channel 200 is positioned excentrically relative to the filter member 101. In Figure 2, both of the inlet channel 200 and the filter member 101 have a diameter of 300 mm The inlet channel 200 and the filter member 101 are welded together in both Figure 1 and Figure 2. In Figure 2, the inlet channel 200 and the filter member 101 define an angle *β* of about 130° between the inlet channel 200 and the filter member 101. In Figure 1, a vertical drop d of about 4 cm exists, and in Figure 2, vertical drop *d* is 0 cm, but the plurality of parasite removal nozzles 104 is located at a downstream distance of 4 cm from the inlet interface A. The pluralities of parasite removal nozzles 104 in both examples are arranged in circles, and each parasite removal nozzle 104 is angled at about 90° to the direction along the longitudinal axis *X-X.*

The examples in Figure 1 and Figure 2 have circular openings 107 with a diameter of about 25 mm.

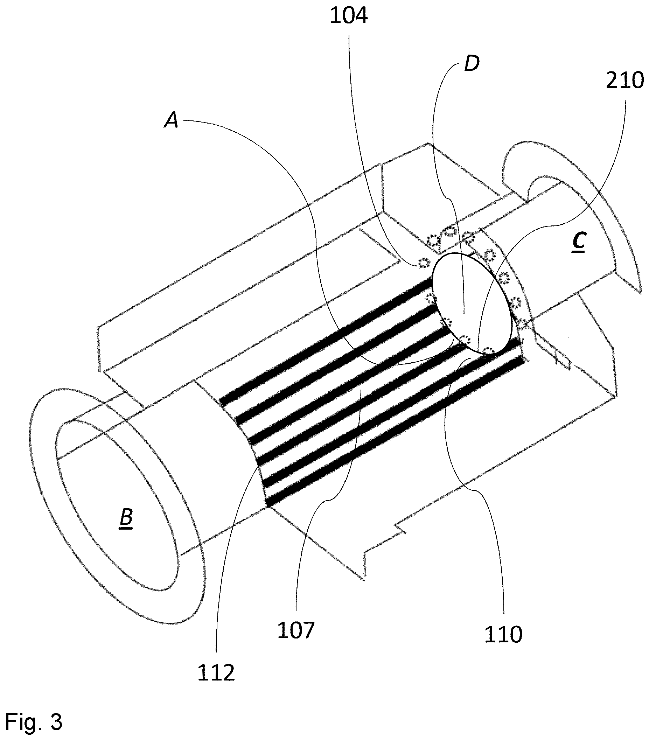

A specific example of the device is shown in Figure 3. In Figure 3, the device 100 comprises circular tubes to make up the inlet channel 200 and the filter member 101. The circular tubes are made from AISI 316 stainless steel. The inlet channel has a diameter of 35 cm and the filter member 101 has a diameter of 50 cm, and the inlet channel 200 is positioned excentrically relative to the filter member 101 by welding the inlet channel 200 and the filter member 101 together. Thus, the distance from the bottom edge 210 of the inlet channel 200 and the bottom edge 110 of the filter member 101, and thereby the vertical drop *d*, is 15 cm. The filter member 101 and the inlet channel has the same inclination to horizontal, which is about 45°. The filter member 101 comprises a plurality of bars 112 arranged along the longitudinal axis *X-X* at a distance between the bars of about 5 cm. The bars are also made from AISI 316 stainless steel and have a diameter of about 5 cm. The distance between the bars provides the openings 107. The bars 112 extend from the inlet interface A toward the outlet *B* at about 75% of the distance from the inlet interface A to the outlet *B*.

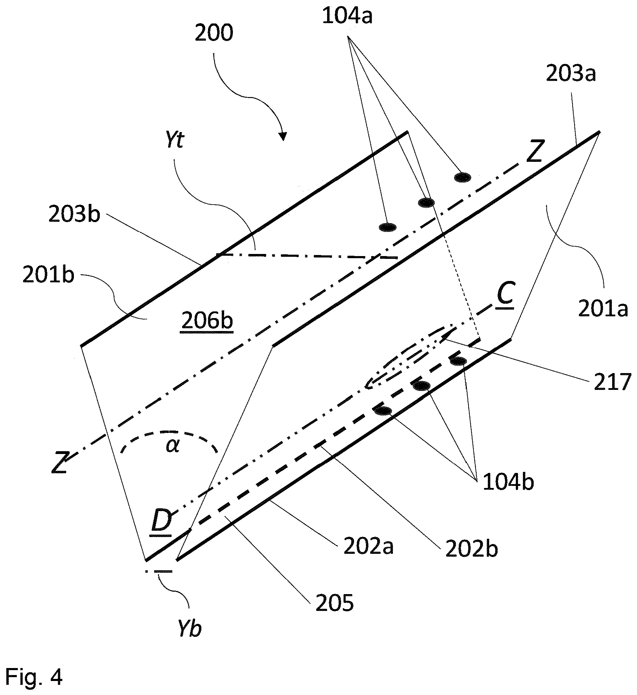

In a specific example of the inlet channel 200, as depicted in Figure 4, the inlet channel 200 has two walls 201a and 201b, distanced from each other along a longitudinal axis Z-Z. The two walls 201a and 201b are arranged with respect to gravity to have a downward slope along the longitudinal axis *Z-Z* from the inlet *C* between the two walls 201a and 201b to the connection interface *D* between the two walls 201a and 201b. The slope of the depicted inlet channel 200 in Figure 4 is about 25°, although the downward slope may have an inclination to horizontal in the range of 2° to 60°.

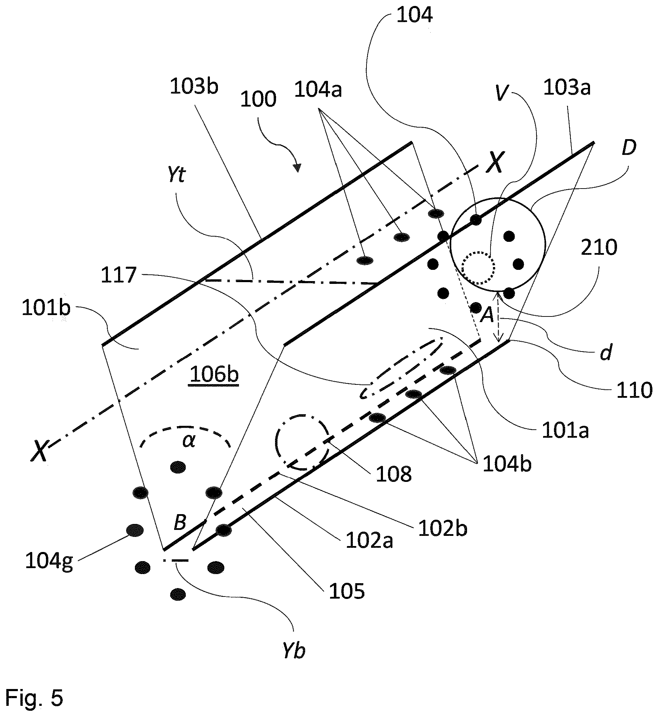

An example of the filter member 101 corresponding to the inlet channel 200 depicted in Figure 4 is shown in Figure 5. Thus, the filter member 101 has two walls 101a and 101b, distanced from each other along a longitudinal axis *X-X.* The two walls 101a and 101b are arranged with respect to gravity to have a downward slope along the longitudinal axis *X-X* from the inlet interface A between the two walls 101a and 101b to the outlet *B* between the two walls 101a and 101b. The slope of the depicted inlet channel 200 in Figure 5 is about 25°, although the downward slope may have an inclination to horizontal in the range of 2° to 60°.

In Figure 4 is shown in Figure 5, the two walls 201a, 101a and 201b, 101b each have a bottom edge 202a, 102a and 202b, 102b, respectively, and a top edge 203a, 103a and 203b, 103b, respectively, with a distance *Yb* between the bottom edges 202a, 102a and 202b, 102b forming apertures 105, 205. A distance *Yt* between the top edges 203a, 103a and 203b, 103b is larger than the distance *Yb* between the bottom edges 202a, 102a and 202b, 102b so as to form angles α between the two walls 101a and 101b, and 201a and 201b, respectively. In Figure 4 and Figure 5, the angle α is about 60°, although the angle α may be in the range of 10° to 140°. As depicted in Figure 4 and Figure 5, the distance *Yb* is shown to be larger than 0, i.e. the apertures 105, 205 are formed. It is to be understood that the distance *Yb* may also be 0, so that the bottom edges 102a and 102b, and 202a and 202b are joined together and form junctions (not shown in Figure 4 and Figure 5).

The inlet channel 200 and the filter member 101 depicted in Figure 4 and Figure 5, respectively, have parasite removal nozzles 104a above the line defined between the inlet point (*C, A*) and the outlet point (*D, B*) and parasite removal nozzles 104b below the line. The parasite removal nozzles 104a,104b are configured to eject a fluid toward a position 217 in Figure 4 and a position 117 in Figure 5, respectively.

The inlet filter 101 in Figure 5 has a plurality of parasite removal nozzles 104 surrounds a target volume *V* and is configured to eject a fluid toward the target volume *V.* The plurality of parasite removal nozzles 104 is angled to form an angle of about 90° relative to the longitudinal direction, e.g. the line between the inlet interface A and the outlet B.

In Figure 5, there is provided a plurality of guidance nozzles 104g surrounding a perimeter *P* at the outlet *B*, the plurality of guidance nozzles 104g being configured to eject a fluid (not shown) toward a site 108 between the inlet interface *A* and the outlet *B*. In the device 100, the distance between the inlet interface *A* and the outlet *B* is about 200 cm, and the plurality of parasite removal nozzles 104 is angled to form an angle of about 90° relative to the longitudinal direction, e.g. the line between the inlet interface A and the outlet *B.*

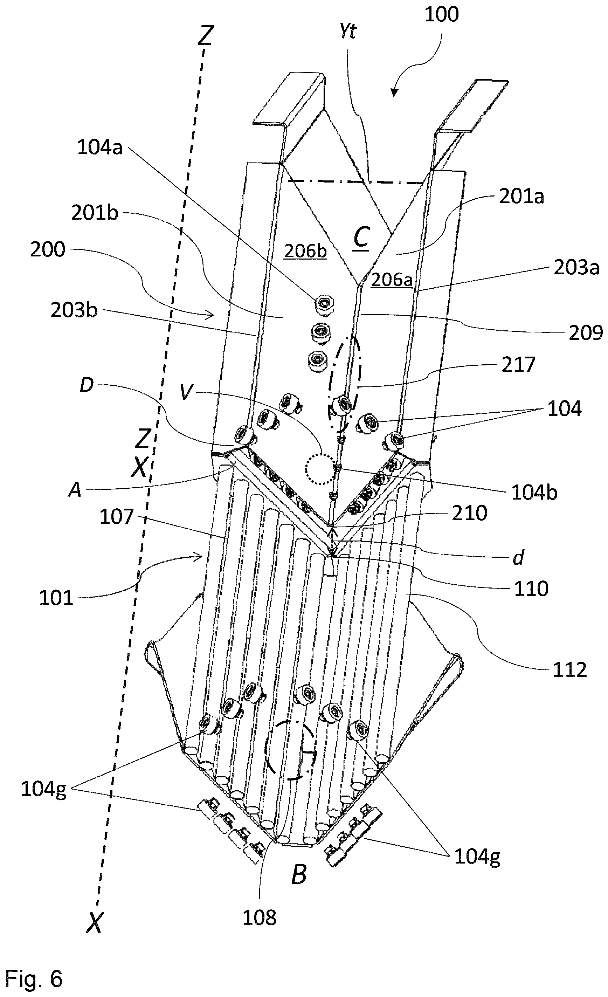

The two walls 201a and 201b depicted in Figure 4 each have a have a sliding surface, and the sliding surface 206b is indicated on the wall 201b. It is to be understood that a corresponding sliding surface is present on the wall 201a. Likewise, the two walls 101a and 101b depicted in Figure 5 each have a have a sliding surface, and the sliding surface 106b is indicated on the wall 101b. It is to be understood that a corresponding sliding surface is present on the wall 101a. In Figure 6 both sliding surfaces 206a and 206b of the inlet channel 200 are shown. The walls 101a 101b, 201a and 201b in Figure 4, and Figure 5 are made from sheets of stainless steel, specifically AISI 316L, although other steel types are equally relevant. Likewise, the filter member 101 in Figure 6 is also made from stainless steel.

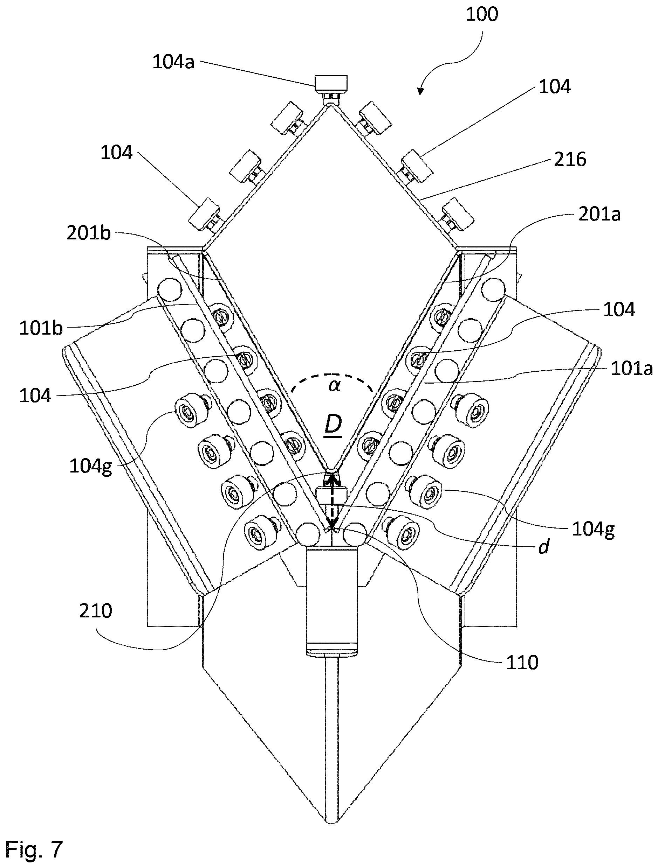

An example is depicted in a perspective view in Figure 6 and the same device 100 is shown from the end represented by the outlet *B* in Figure 7. The device in Figure 6 has an inclination of about 45°, and the total length is about 300 cm. Each of the walls 201a and 201b is made from AISI 316L stainless steel and have smooth sliding surfaces 206a and 206b. The length of the each of the inlet channel 200 and the filter member 101 are about 50% of the length of the device 100. The filter member 101 is provided by a plurality of bars arranged along the longitudinal axis *X-X* at a distance between the bars of about 30 mm. The distance between the bars represent openings 107, thus having a cut-off size of about 30 mm. The distance between the bars may also be in the range of 0.5 mm to 50 mm, e.g. 5 mm to 25 mm. The bars are made from AISI 316L tubes having a diameter of about 30 mm, and likewise, the bars may have diameters in the range of 5 mm to 25 mm.

The device 100 in Figure 6 and also in Figure 7 has a plurality of guidance nozzles 104g surrounding the perimeter *P* at the outlet *B*; the guidance nozzles 104 are angled at about 60° to eject liquid toward a site 108 close to the outlet *B.* The device 100 in in Figure 6 has a plurality of parasite removal nozzles 104 located in the interface between the inlet channel 200 and the filter member 101. The plurality of parasite removal nozzles 104 is angled to eject a liquid toward at the target volume *V.* The inlet channel 200 also comprises a set of parasite removal nozzles 104a that is arranged above the line *C-D* defined between the inlet and the connection interface. The parasite removal nozzles 104a are mounted in a roof (not shown in Figure 6). Another set of parasite removal nozzles 104b is arranged in the inlet channel 200 below the line *C-D* defined between the inlet *C* and the connection interface *D.* The parasite removal nozzles 104a, 104b are configured to eject a liquid (not shown) toward a position 217 on the line *C-D* defined between the inlet *C* and the connection interface *D.* Thus, when a fish enters the device 100, it will be oriented as allowed by the angle α between the walls 201a and 201b, so that its belly will be facing the aperture 205 or the junction 209 and its back will point away from the aperture 205 or the junction 209, or vice versa. Thereby, the fish follows the line *C-D* defined between the inlet *C* and the connection interface *D* in its movement through the device 100 so that the parasite removal nozzle 104a ejects a fluid impinging on the back of the fish, and the parasite removal nozzle 104b ejects a fluid impinging on the belly of the fish. Thereby, the parasite removal nozzles 104a and 104b impinge the fins on the back of the fish and the fins on the belly of the fish, respectively, and parasites attached at or near these fins are detached more efficiently than by the jets of fluid ejected from the plurality of parasite removal nozzles 104.

The angle α, which is about 60° in the device 100 in Figure 6, between the two walls 201a and 201b ensures that a fish in the device 100 will orient itself according to the angle α. In the device 100 in Figure 6 the distance between the bottom edges 202a, 202b is so small that the two walls 201a and 201b form a junction 209. When a pelagic fish enters the device 100, the angle α will ensure that the fish cannot change its direction relative to the longitudinal axis *Z-Z.* When a pelagic fish thus enters the device 100, it will be oriented due to the angle α between the walls 201a and 201b, so that either its head or its tail faces the connection interface *D* with either its back, e.g. the dorsal fins, or its belly, e.g. the fins on the belly, e.g. the anal fins, facing the nozzles 104a or the nozzles 104b, or vice versa. Thereby, the fish will follow the line *C-D* defined between the inlet *C* and the connection interface *D* in its movement through the device so that the parasite removal nozzles 104a and 104b eject a fluid that impinges on the back of the fish and the belly of the fish, respectively, and thereby the parasite removal nozzles 104a and 104b can more efficiently remove parasites attached near the fins on the back of the fish and the fins on the belly of the fish. Thus, the parasite removal nozzles 104a and 104b allow selective removal of parasites near the dorsal and anal fins of a fish.

When the fish nears the parasite removal nozzles 104 at the inlet interface A, the jets of fluid (not shown) impinge the fish evenly around its circumference. Thus, the angle α helps orienting the fish, which in turns provides a more efficient removal of parasites.

Figure 7 shows the embodiment illustrated in Figure 6 when viewed in the direction of the longitudinal axis (not shown) from the outlet end of the device 100. The two walls 201a and 201b are distanced from each other along the longitudinal axis. The bottom edges 202a and 202b of the two walls 201a and 201b have a distance of 0 cm between them forming junction 209, although the distance may also be larger thus forming an aperture 205. The distance between the top edges 203a and 203b is larger than the distance between the bottom edges 202a and 202b, which forms an angle α between the two walls 201a and 201b.

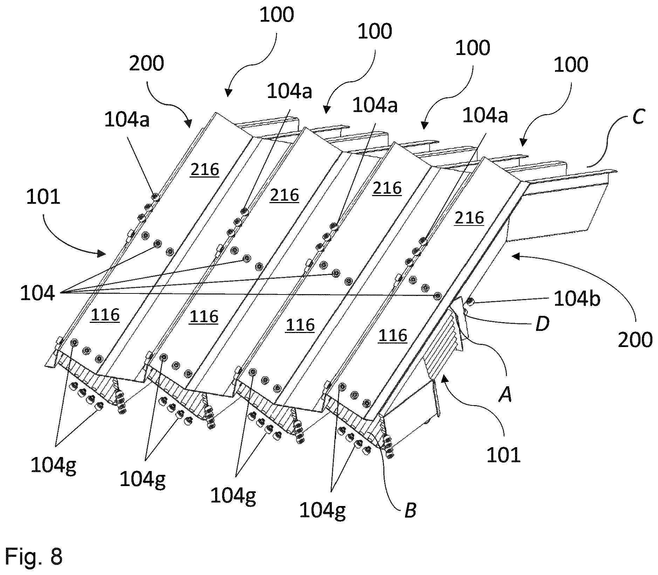

Figure 8 shows four units of the device 100 illustrated in Figure 6 and Figure 7, the units being arranged side by side. Each unit has a roof 216, wherein a secondary plurality of nozzles 104a is mounted, and a roof 116. A further plurality of parasite removal nozzles 104b is located below the line *C-D* defined between the inlet *C* and the connection interface *D.*

In use, a fish is separated from the water in a fish pen or another location, and this fish (not shown) to be treated then enters the device 100 at the inlet *C* so that the fish is oriented in the device 100. The fish will leave the device 100 at the outlet *B* , and while passing from the inlet *C* to the outlet *B*, the fish is exposed to the fluid from the parasite removal nozzles 104, 104a and/or 104b. Jets of fluid (not shown), e.g. water or a mixture of water and air, from the parasite removal nozzles 104, 104a and/or 104b of the device 100 impinge on the fish, and the impingement detaches parasites (not shown), e.g. a salmon lice, present at the site of impingement on the skin of the fish from the fish.

**Reference numerals**

| | |
|---|---|
| Device | 100 |
| Filter member | 101 |
| Walls | 101a, 101b, 201a, 201b |
| Bottom edges | 102a, 102b, 202a, 202b |
| Top edges | 103a, 103b, 203a, 203b |
| Parasite removal nozzles | 104 |
| Parasite removal nozzles above *A-B* / *C-D* | 104a |
| Parasite removal nozzles below *A-B* / *C-D* | 104b |
| Guidance nozzles | 104g |
| Aperture | 105, 205 |
| Sliding surfaces | 106a, 106b, 206a, 206b |
| Openings | 107 |
| Site | 108 |
| Junction | 209 |
| Bottom edge of filter member | 110 |
| Bars | 112 |
| Roof | 116, 216 |
| Position | 117, 217 |
| Inlet channel | 200 |
| Bottom edge of inlet channel | 210 |
| Inlet perimeter | *A* |
| Outlet perimeter | *B* |
| Inlet | C |
| Connection interface | *D* |
| Perimeter | *P* |
| Longitudinal axis of filter member | *X-X* |
| Longitudinal axis of inlet channel | *Z*-*Z* |
| Vertical drop | *d* |
| Downstream distance | *e* |
| Target volume | *V* |
| Distance between the bottom edges | *Yb* |
| Distance between the top edges | *Yt* |
| Angle between walls | *α* |
| Angle between inlet channel and filter member | *β* |

## Claims

1. A device (100) for reducing the number of parasites on a fish, the device (100) comprising:
- a filter member (101) arranged with respect to gravity to have a downward slope along a longitudinal axis (*X-X*) from an inlet interface (*A*) of the filter member (101) to an outlet (*B*) of the filter member (101), the filter member (101) having openings (107) with a smallest dimension in the range of 0.5 mm to 50 mm;
- an inlet channel (200) having an inlet (*C*) at a first end of the inlet channel (200) and a connection interface (*D*) at a second end of the inlet channel (200) and being arranged with respect to gravity to have a downward slope along a longitudinal axis (*Z*-*Z*) from the inlet (*C*) to the connection interface (*D*), the inlet channel (200) being arranged to provide fluid communication between the connection interface (*D*) and the inlet interface (*A*) of the filter member (101);
- a plurality of parasite removal nozzles (104) surrounding a target volume (*V*) and being configured to eject a fluid toward the target volume (*V*), the plurality of parasite removal nozzles (104) being positioned at a downstream distance (*e*) from the inlet interface (*A*) along the longitudinal axis (X-X);
wherein the downward slope of the inlet channel (200) has an inclination to horizontal, which is the same as or different from an inclination to horizontal of the filter member (101), and the inlet channel (200) is arranged to provide a vertical drop (*d*) from a bottom edge (210) of the inlet channel (200) at the connection interface (*D*) to a bottom edge (110) of the filter member (101) at the inlet interface (*A*), which vertical drop (*d*) is in the range of 2 cm to 50 cm, and which downstream distance (*e*) is in the range of 0 cm to 50 cm;
or
wherein the downward slope of the inlet channel (200) has an inclination to horizontal, which is smaller than the inclination to horizontal of the filter member (101), and the downstream distance (*e*) is in the range of 2 cm to 50 cm.

2. The device (100) for reducing the number of parasites on a fish according to claim 1, wherein the inclination to horizontal of the inlet channel (200) is smaller than the inclination to horizontal of the filter member (101), and an angle (*β*) is defined between the inlet channel (200) and the filter member (101), which angle is in the range of 100° to 160°.

3. The device (100) for reducing the number of parasites on a fish according to any one of claims 1 or 2, wherein the inlet channel (200) and the filter member (101) have cross-sectional shapes having a largest cross-sectional dimension, and wherein the largest cross-sectional dimension of the cross-sectional shape of the filter member (101) is larger than or equal to the largest cross-sectional dimension of the cross-sectional shape of the inlet channel (200), and the inlet channel (200) is positioned excentrically relative to the filter member (101).

4. The device (100) for reducing the number of parasites on a fish according to claim 3, wherein the plurality of parasite removal nozzles (104) is defined by a cross-sectional shape having a largest cross-sectional dimension, which largest cross-sectional dimension is equal to or smaller than the largest cross-sectional dimension of the filter member (101) and larger than the largest cross-sectional dimension of the inlet channel (200).

5. The device (100) for reducing the number of parasites on a fish according to claim 4, wherein the cross-sectional shape of the plurality of parasite removal nozzles (104) is arranged concentrically with the cross-sectional shape of the filter member (101).

6. The device (100) for reducing the number of parasites on a fish according to any one of claims 1 or 2, wherein the inlet channel (200) comprises two walls (201a, 201b) distanced from each other along a longitudinal axis (*Z-Z*) with the inlet (*C*) and the connection interface (*D*) being between the two walls (201a, 201b);
- the two walls (201a, 201b) each having a bottom edge (202a, 202b) and a top edge (203a, 203b) with a distance (*Yb*) between the bottom edges (202a, 202b) being in the range of 0 cm to 10 cm, and a distance (*Yt*) between the top edges (203a, 203b) being larger than the distance between the bottom edges(202a, 202b) so as to form an angle (*α*) between the two walls (201a, 201b) in the range of 10° to 140°;
- the inlet channel (200) further comprising a parasite removal nozzle (104a) above a line (*C-D*) defined between the inlet (*C*) and the connection interface (*D*) and/or a parasite removal nozzle (104b) below the line (*C-D*) defined between the inlet (*C*) and the connection interface (*D*), the parasite removal nozzle(s) (104a, 104b) being configured to eject a fluid toward a position (217) on the line (*C-D*) defined between the inlet (*C*) and the connection interface (*D*).

7. The device (100) for reducing the number of parasites on a fish according to any one of claims 1 to 6, wherein the filter member (101) comprises two walls (101a, 101b), the two walls (101a, 101b) comprising the openings (107) and each having a bottom edge (102a, 102b) and a top edge (103a, 103b) with a distance (*Yb*) between the bottom edges (102a, 102b) being in the range of 0 cm to 10 cm, and a distance (*Yt*) between the top edges (103a, 103b) being larger than the distance between the bottom edges(102a, 102b) so as to form an angle (*α*) between the two walls (101a, 101b) in the range of 10° to 140°;
- the device (100) further comprising a parasite removal nozzle (104a) above a line (*A-B*) defined between the inlet interface (*A*) and the outlet (*B*) and/or a parasite removal nozzle (104b) below the line (*A-B*) defined between the inlet interface (*A*) and the outlet (*B*), the parasite removal nozzle(*s*) (104a, 104b) being configured to eject a fluid toward a position (117) on the line (*A-B*) defined between the inlet interface (*A*) and the outlet (*B*).

8. The device (100) for reducing the number of parasites on a fish according to any one of claims 1 to 6, wherein the filter member (101) comprises a plurality of bars arranged along the longitudinal axis (*X-X*) at a distance between the bars in the range of 0.5 mm to 50 mm.

9. The device (100) for reducing the number of parasites on a fish according to any one of claims 1 to 8 further comprising a plurality of guidance nozzles (104g) at the outlet (*B*), the plurality of guidance nozzles (104g) being configured to eject a fluid toward a site (108) between the inlet interface (*A*) and the outlet (*B*).

10. The device (100) for reducing the number of parasites on a fish according to any one of claims 1 to 9, wherein the downward slope of the filter member (101) and/or the inlet channel (200) has an inclination to horizontal in the range of 2° to 60°.

11. The device (100) for reducing the number of parasites on a fish according to any one of claims 1 to 10, wherein the device (100) further comprises a water supply for providing a flow of water from the inlet (*C*) to the outlet point (*B*).

12. The device (100) for reducing the number of parasites on a fish according to any one of claims 1 to 11, wherein the device (100) comprises a roof (116) configured to cover the filter member (101) and/or a roof (216) configured to cover the inlet channel (201).

13. The device (100) for reducing the number of parasites on a fish according to any one of claims 1 to 12, wherein the device (100) further comprises a filter located at the outlet (*B*) and/or below the bottom edges (102a, 102b).

14. The device (100) for reducing the number of parasites on a fish according to any one of claims 1 to 13, wherein the device (100) further comprises two or more cameras and a computing device configured to compare pictures recorded by the two or more cameras in order to estimate the detachment of parasites from a fish.

## Patentansprüche

1. Vorrichtung (100) zum Reduzieren der Anzahl von Parasiten an einem Fisch, wobei die Vorrichtung (100) Folgendes umfasst:
- ein Filterelement (101), das in Bezug auf die Schwerkraft so angeordnet ist, dass es eine Abwärtsneigung entlang einer Längsachse (X-X) von einer Einlassschnittstelle (A) des Filterelements (101) zu einem Auslass (B) des Filterelements (101) aufweist, wobei das Filterelement (101) Öffnungen (107) mit einer kleinsten Abmessung im Bereich von 0,5 mm bis 50 mm aufweist;
- einen Einlasskanal (200), der einen Einlass (C) an einem ersten Ende des Einlasskanals (200) und eine Verbindungsschnittstelle (D) an einem zweiten Ende des Einlasskanals (200) aufweist und in Bezug auf die Schwerkraft so angeordnet ist, dass er eine Abwärtsneigung entlang einer Längsachse (Z-Z) vom Einlass (C) zur Verbindungsschnittstelle (D) aufweist, wobei der Einlasskanal (200) dazu angeordnet ist, eine Fluidverbindung zwischen der Verbindungsschnittstelle (D) und der Einlassschnittstelle (A) des Filterelements (101) vorzusehen;
- mehrere Parasitenentfernungsdüsen (104), die ein Zielvolumen (V) umgeben und dazu ausgelegt sind, ein Fluid in Richtung des Zielvolumens (V) auszustoßen, wobei die mehreren Parasitenentfernungsdüsen (104) in einer nachgelagerten Entfernung (e) von der Einlassschnittstelle (A) entlang der Längsachse (X-X) positioniert sind;
wobei die Abwärtsneigung des Einlasskanals (200) eine Neigung zur Horizontalen aufweist, die gleich oder verschieden von einer Neigung zur Horizontalen des Filterelements (101) ist, und der Einlasskanal (200) dazu angeordnet ist, ein vertikales Gefälle (d) von einer Unterkante (210) des Einlasskanals (200) an der Verbindungsschnittstelle (D) zu einer Unterkante (110) des Filterelements (101) an der Einlassschnittstelle (A) vorzusehen, wobei das vertikale Gefälle (d) im Bereich von 2 cm bis 50 cm liegt und die nachgelagerte Entfernung (e) im Bereich von 0 cm bis 50 cm liegt;
oder
wobei die Abwärtsneigung des Einlasskanals (200) eine Neigung zur Horizontalen aufweist, die kleiner als die Neigung zur Horizontalen des Filterelements (101) ist, und die nachgelagerte Entfernung (e) im Bereich von 2 cm bis 50 cm liegt.

2. Vorrichtung (100) zum Reduzieren der Anzahl von Parasiten an einem Fisch nach Anspruch 1, wobei die Neigung zur Horizontalen des Einlasskanals (200) kleiner als die Neigung zur Horizontalen des Filterelements (101) ist und ein Winkel (β) zwischen dem Einlasskanal (200) und dem Filterelement (101) definiert ist, der im Bereich von 100° bis 160° liegt.

3. Vorrichtung (100) zum Reduzieren der Anzahl von Parasiten an einem Fisch nach einem der Ansprüche 1 oder 2, wobei der Einlasskanal (200) und das Filterelement (101) Querschnittsformen mit einer größten Querschnittsabmessung aufweisen und wobei die größte Querschnittsabmessung der Querschnittsform des Filterelements (101) größer als oder gleich der größten Querschnittsabmessung der Querschnittsform des Einlasskanals (200) ist, und der Einlasskanal (200) zum Filterkörper (101) exzentrisch positioniert ist.

4. Vorrichtung (100) zum Reduzieren der Anzahl von Parasiten an einem Fisch nach Anspruch 3, wobei die mehreren Parasitenentfernungsdüsen (104) durch eine Querschnittsform mit einer größten Querschnittsabmessung definiert sind, wobei die größte Querschnittsabmessung gleich oder kleiner als die größte Querschnittsabmessung des Filterelements (101) und größer als die größte Querschnittsabmessung des Einlasskanals (200) ist.

5. Vorrichtung (100) zum Reduzieren der Anzahl von Parasiten an einem Fisch nach Anspruch 4, wobei die Querschnittsform der mehreren Parasitenentfernungsdüsen (104) mit der Querschnittsform des Filterelements (101) konzentrisch angeordnet ist.

6. Vorrichtung (100) zum Reduzieren der Anzahl von Parasiten an einem Fisch nach einem der Ansprüche 1 oder 2, wobei der Einlasskanal (200) zwei Wände (201a, 201b) umfasst, die entlang einer Längsachse (Z-Z) voneinander entfernt sind, wobei sich der Einlass (C) und die Verbindungsschnittstelle (D) zwischen den zwei Wänden (201a, 201b) befinden;
- wobei die beiden Wände (201a, 201b) jeweils eine Unterkante (202a, 202b) und eine Oberkante (203a, 203b) mit einer Entfernung (Yb) zwischen den Unterkanten (202a, 202b) im Bereich von 0 cm bis 10 cm und mit einer Entfernung (Yt) zwischen den Oberkanten (203a, 203b), die größer als die Entfernung zwischen den Unterkanten (202a, 202b) ist, aufweisen, um einen Winkel (α) zwischen den beiden Wänden (201a, 201b) im Bereich von 10° bis 140° zu bilden;
- wobei der Einlasskanal (200) ferner eine Parasitenentfernungsdüse (104a) oberhalb einer Linie (CD), die zwischen dem Einlass (C) und der Verbindungsschnittstelle (D) definiert ist, und/oder eine Parasitenentfernungsdüse (104b) unterhalb der Linie (C-D), die zwischen dem Einlass (C) und der Verbindungsschnittstelle (D) definiert ist, umfasst, wobei die Parasitenentfernungsdüse(n) (104a, 104b) dazu ausgelegt ist/sind, ein Fluid zu einer Position (217) auf der zwischen dem Einlass (C) und der Verbindungsschnittstelle (D) definierten Line auszustoßen.

7. Vorrichtung (100) zum Reduzieren der Anzahl von Parasiten an einem Fisch nach einem der Ansprüche 1 bis 6, wobei das Filterelement (101) zwei Wände (101a, 101b) umfasst, wobei die zwei Wände (101a, 101b) die Öffnungen (107) umfassen und jeweils eine Unterkante (102a, 102b) und eine Oberkante (103a, 103b) aufweisen, wobei die Entfernung (Yb) zwischen den Unterkanten (102a, 102b) im Bereich von 0 cm bis 10 cm liegt und die Entfernung (Yt) zwischen den Oberkanten (103a, 103b) größer als die Entfernung zwischen den Unterkanten (102a, 102b) ist, um einen Winkel (α) zwischen den beiden Wänden (101a, 101b) im Bereich von 10° bis 140° zu bilden;
- wobei die Vorrichtung (100) ferner eine Parasitenentfernungsdüse (104a) oberhalb einer Linie (AB), die zwischen der Einlassschnittstelle (A) und dem Auslass (B) definiert ist, und/oder eine Parasitenentfernungsdüse (104b) unterhalb der Linie (AB), die zwischen der Einlassschnittstelle (A) und dem Auslass (B) definiert ist, umfasst, wobei die Parasitenentfernungsdüse(n) (104a, 104b) dazu ausgelegt ist/sind, ein Fluid zu der Position (117) auf der zwischen der Einlassschnittstelle (A) und dem Auslass (B) definierten Linie (A-B) auszustoßen.

8. Vorrichtung (100) zum Reduzieren der Anzahl von Parasiten an einem Fisch nach einem der Ansprüche 1 bis 6, wobei das Filterelement (101) mehrere Stäbe umfasst, die entlang der Längsachse (X-X) in einer Entfernung zwischen den Stäben im Bereich von 0,5 mm bis 50 mm angeordnet sind.

9. Vorrichtung (100) zum Reduzieren der Anzahl von Parasiten an einem Fisch nach einem der Ansprüche 1 bis 8, die ferner mehrere Führungsdüsen (104g) am Auslass (B) umfasst, wobei die mehreren Führungsdüsen (104g) dazu ausgelegt sind, ein Fluid zu einer Stelle (108) zwischen der Einlassschnittstelle (A) und dem Auslass (B) auszustoßen.

10. Vorrichtung (100) zum Reduzieren der Anzahl von Parasiten an einem Fisch nach einem der Ansprüche 1 bis 9, wobei die Abwärtsneigung des Filterelements (101) und/oder des Einlasskanals (200) eine Neigung zur Horizontalen im Bereich von 2° bis 60° aufweist.

11. Vorrichtung (100) zum Reduzieren der Anzahl von Parasiten an einem Fisch nach einem der Ansprüche 1 bis 10, wobei die Vorrichtung (100) ferner eine Wasserzufuhr zum Vorsehen eines Wasserstroms vom Einlass (C) zum Auslasspunkt (B) umfasst.

12. Vorrichtung (100) zum Reduzieren der Anzahl von Parasiten an einem Fisch nach einem der Ansprüche 1 bis 11, wobei die Vorrichtung (100) ein Dach (116), das zum Abdecken des Filterelements (101) ausgelegt ist, und/oder ein Dach (216), das zum Abdecken des Einlasskanals (201) ausgelegt ist, umfasst.

13. Vorrichtung (100) zum Reduzieren der Anzahl von Parasiten an einem Fisch nach einem der Ansprüche 1 bis 12, wobei die Vorrichtung (100) ferner einen Filter umfasst, der sich am Auslass (B) und/oder unter den Unterkanten (102a, 102b) befindet.

14. Vorrichtung (100) zum Reduzieren der Anzahl von Parasiten an einem Fisch nach einem der Ansprüche 1 bis 13, wobei die Vorrichtung (100) ferner zwei oder mehrere Kameras und eine Rechenvorrichtung umfasst, die dazu ausgelegt ist, Bilder zu vergleichen, die von den zwei oder mehreren Kameras aufgezeichnet werden, um die Ablösung von Parasiten von einem Fisch einzuschätzen.

## Revendications

1. Dispositif (100) pour réduire le nombre de parasites sur un poisson, le dispositif (100) comprenant :
- un élément filtre (101) agencé par rapport à la gravité pour avoir une pente descendante le long d'un axe longitudinal (X-X) depuis une interface d'entrée (A) de l'élément filtre (101) jusqu'à une sortie (B) de l'élément filtre (101), l'élément filtre (101) ayant des ouvertures (107) avec une dimension la plus petite dans la plage de 0,5 mm à 50 mm ;
- un canal d'entrée (200) ayant une entrée (C) au niveau d'une première extrémité du canal d'entrée (200) et une interface de raccordement (D) au niveau d'une seconde extrémité du canal d'entrée (200) et étant agencé par rapport à la gravité pour avoir une pente descendante le long d'un axe longitudinal (Z-Z) depuis l'entrée (C) jusqu'à l'interface de raccordement (D), le canal d'entrée (200) étant agencé pour fournir une communication fluidique entre l'interface de raccordement (D) et l'interface d'entrée (A) de l'élément filtre (101) ;
- une pluralité de buses d'élimination de parasite (104) entourant un volume cible (V) et configurées pour éjecter un fluide vers le volume cible (V), la pluralité de buses d'élimination de parasite (104) étant positionnées à une distance aval (e) quant à l'interface d'entrée (A) le long de l'axe longitudinal (X-X) ;
dans lequel la pente descendante du canal d'entrée (200) a une inclinaison relativement à l'horizontale, qui est la même que ou différente d'une inclinaison relativement à l'horizontale de l'élément filtre (101), et le canal d'entrée (200) est agencé pour fournir une chute verticale (d) depuis un bord inférieur (210) du canal d'entrée (200) au niveau de l'interface de raccordement (D) jusqu'à un bord inférieur (110) de l'élément filtre (101) au niveau de l'interface d'entrée (A), laquelle chute verticale (d) est dans la plage de 2 cm à 50 cm, et laquelle distance aval (e) est dans la plage de 0 cm à 50 cm ;
ou
dans lequel la pente descendante du canal d'entrée (200) a une inclinaison relativement à l'horizontale, qui est plus petite que l'inclinaison relativement à l'horizontale de l'élément filtre (101), et la distance aval (e) est dans la plage de 2 cm à 50 cm.

2. Dispositif (100) pour réduire le nombre de parasites sur un poisson selon la revendication 1, dans lequel l'inclinaison relativement à l'horizontale du canal d'entrée (200) est plus petite que l'inclinaison relativement à l'horizontale de l'élément filtre (101), et un angle (β) est défini entre le canal d'entrée (200) et l'élément filtre (101), lequel angle est dans la plage de 100° à 160°.

3. Dispositif (100) pour réduire le nombre de parasites sur un poisson selon l'une quelconque des revendications 1 ou 2, dans lequel le canal d'entrée (200) et l'élément filtre (101) ont des formes de section transversale ayant une dimension de section transversale la plus grande, et dans lequel la dimension de section transversale la plus grande de la forme de section transversale de l'élément filtre (101) est plus grande que, ou égale à, la dimension de section transversale la plus grande de la forme de section transversale du canal d'entrée (200), et le canal d'entrée (200) est positionné excentriquement quant à l'élément filtre (101).

4. Dispositif (100) pour réduire le nombre de parasites sur un poisson selon la revendication 3, dans lequel la pluralité de buses d'élimination de parasite (104) est définie par une forme de section transversale ayant une dimension de section transversale la plus grande, laquelle dimension de section transversale la plus grande est égale à, ou plus petite que, la dimension de section transversale la plus grande de l'élément filtre (101) et plus grande que la dimension de section transversale la plus grande du canal d'entrée (200).

5. Dispositif (100) pour réduire le nombre de parasites sur un poisson selon la revendication 4, dans lequel la forme de section transversale de la pluralité de buses d'élimination de parasite (104) est agencée concentriquement avec la forme de section transversale de l'élément filtre (101).

6. Dispositif (100) pour réduire le nombre de parasites sur un poisson selon l'une quelconque des revendications 1 ou 2, dans lequel le canal d'entrée (200) comprend deux parois (201a, 201b) éloignée l'une de l'autre le long d'un axe longitudinal (Z-Z) avec l'entrée (C) et l'interface de raccordement (D) entre les deux parois (201a, 201b) ;
- les deux parois (201a, 201b) ayant chacune un bord inférieur (202a, 202b) et un bord supérieur (203a, 203b) avec une distance (Yb) entre les bords inférieurs (202a, 202b) dans la plage de 0 cm à 10 cm, et une distance (Yt) entre les bords supérieurs (203a, 203b) plus grande que la distance entre les bords inférieurs (202a, 202b) afin de former un angle (α) entre les deux parois (201a, 201b) dans la plage de 10° à 140° ;
- le canal d'entrée (200) comprenant en outre une buse d'élimination de parasite (104a) au-dessus d'une ligne (C-D) définie entre l'entrée (C) et l'interface de raccordement (D) et/ou une buse d'élimination de parasite (104b) en dessous de la ligne (C-D) définie entre l'entrée (C) et l'interface de raccordement (D), la buse d'élimination de parasite(s) (104a, 104b) étant configurée pour éjecter un fluide vers une position (217) sur la ligne (C-D) définie entre l'entrée (C) et l'interface de raccordement (D).

7. Dispositif (100) pour réduire le nombre de parasites sur un poisson selon l'une quelconque des revendications 1 à 6, dans lequel l'élément filtre (101) comprend deux parois (101a, 101b), les deux parois (101a, 101b) comprenant les ouvertures (107) et chacune ayant un bord inférieur (102a, 102b) et un bord supérieur (103a, 103b) avec une distance (Yb) entre les bords inférieurs (102a, 102b) dans la plage de 0 cm à 10 cm, et une distance (Yt) entre les bords supérieurs (103a, 103b) plus grande que la distance entre les bords inférieurs (102a, 102b) afin de former un angle (α) entre les deux parois (101a, 101b) dans la plage de 10° à 140° ;
- le dispositif (100) comprenant en outre une buse d'élimination de parasite (104a) au-dessus d'une ligne (A-B) définie entre l'interface d'entrée (A) et la sortie (B) et/ou une buse d'élimination de parasite (104b) en dessous de la ligne (A-B) définie entre l'interface d'entrée (A) et la sortie (B), la buse d'élimination de parasite(s) (104a, 104b) étant configurée pour éjecter un fluide vers une position (117) sur la ligne (A-B) définie entre l'interface d'entrée (A) et la sortie (B).

8. Dispositif (100) pour réduire le nombre de parasites sur un poisson selon l'une quelconque des revendications 1 à 6, dans lequel l'élément filtre (101) comprend une pluralité de barres agencées le long de l'axe longitudinal (X-X) à une distance entre les barres dans la plage de 0,5 mm à 50 mm.

9. Dispositif (100) pour réduire le nombre de parasites sur un poisson selon l'une quelconque des revendications 1 à 8 comprenant en outre une pluralité de buses de guidage (104g) au niveau de la sortie (B), la pluralité de buses de guidage (104g) étant configurée pour éjecter un fluide vers un site (108) entre l'interface d'entrée (A) et la sortie (B).

10. Dispositif (100) pour réduire le nombre de parasites sur un poisson selon l'une quelconque des revendications 1 à 9, dans lequel la pente descendante de l'élément filtre (101) et/ou le canal d'entrée (200) a une inclinaison relativement à l'horizontale dans la plage de 2° à 60°.

11. Dispositif (100) pour réduire le nombre de parasites sur un poisson selon l'une quelconque des revendications 1 à 10, dans lequel le dispositif (100) comprend en outre une alimentation en eau destinée à fournir un écoulement d'eau depuis l'entrée (C) jusqu'au point de sortie (B).

12. Dispositif (100) pour réduire le nombre de parasites sur un poisson selon l'une quelconque des revendications 1 à 11, dans lequel le dispositif (100) comprend un couvercle (116) configuré pour couvrir l'élément filtre (101) et/ou un couvercle (216) configuré pour couvrir le canal d'entrée (201).

13. Dispositif (100) pour réduire le nombre de parasites sur un poisson selon l'une quelconque des revendications 1 à 12, dans lequel le dispositif (100) comprend en outre un filtre situé au niveau de la sortie (B) et/ou en dessous des bords inférieurs (102a, 102b).

14. Dispositif (100) pour réduire le nombre de parasites sur un poisson selon l'une quelconque des revendications 1 à 13, dans lequel le dispositif (100) comprend en outre deux ou plus de deux caméras et un dispositif informatique configuré pour comparer des images enregistrées par les deux ou plus de deux caméras afin d'estimer la condition détachée de parasites quant à un poisson.
